# EUROPÄISCHE PATENTSCHRIFT

(11) **EP 4 059 743 B1**
(45) Veröffentlichungstag und Bekanntmachung des Hinweises auf die Patenterteilung: **09.07.2025**
(21) Anmeldenummer: 21209446.0
(22) Anmeldetag: 22.11.2021
(51) Int. Cl.: B60C 23/00, B60C 23/04

(54) **VERFAHREN ZUR AUTOMATISCHEN REIFENINNENDRUCKREGELUNG VON RADREIFEN**
METHOD FOR AUTOMATIC CONTROL OF THE INTERNAL PRESSURE OF WHEEL TYRES
PROCÉDÉ DE RÉGULATION AUTOMATIQUE DE LA PRESSION INTERNE DE PNEUS DE ROUE

(30) Priorität: 16.03.2021 DE 102021106315
(43) Veröffentlichungstag der Anmeldung: 21.09.2022
(73) Patentinhaber: CLAAS Selbstfahrende Erntemaschinen GmbH, 33428 Harsewinkel (DE)
(72) Erfinder: Dopheide, Gregor, 33775 Versmold (DE); Kupka, Nick, 59063 Hamm (DE)
(74) Vertreter: CLAAS Gruppe

(56) Entgegenhaltungen:
- WO-A1-2020/131539
- DE-U1- 202019 102 183
- US-A1- 2015 032 287
- US-A1- 2016 139 003
- US-A1- 2018 281 535

## Beschreibung

Die vorliegende Erfindung betrifft ein Verfahren zur automatischen Reifeninnendruckregelung von Radreifen an einem landwirtschaftlichen Arbeitsfahrzeug gemäß dem Oberbegriff des Anspruches 1 sowie ein landwirtschaftliches Arbeitsfahrzeug zur Verwendung in einem solchen Verfahren gemäß dem Anspruch 13.

Für den Betrieb eines landwirtschaftlichen Arbeitsfahrzeugs mit Radreifen ist der einzustellende Reifeninnendruck von besonderer Bedeutung, wenn es um den Kraftstoffverbrauch oder die Bodenverdichtung geht. Die Anpassung der Reifeninnendrücke von Radreifen an landwirtschaftlichen Arbeitsfahrzeugen erfolgt mittels einer Reifendruckregelanlage. Für eine betriebssituationsabhängige Einstellung des jeweiligen Reifeninnendrucks sind verschiedene maschinenspezifische Parameter zu berücksichtigen, zu denen die Masse des Arbeitsfahrzeugs, die Fahrgeschwindigkeit sowie der Reifentyp gehören. Der Reifentyp bestimmt, welche herstellerspezifischen Last-Luftdrücke einzuhalten sind, um den sicheren Betrieb des Arbeitsfahrzeugs sowohl auf dem Feld als auch auf der Straße zu gewährleisten. Die Masse des Arbeitsfahrzeugs kann unter anderem mit der Be- und Entladung von Erntegut, Betriebsmitteln oder dergleichen und/oder dem Vorhandensein von und der Art der Ausstattung des Arbeitsfahrzeugs mit Anbaugeräten variieren. Im einfachsten Fall erfolgt die Regelung lediglich anhand einer Wertes für den Soll-Reifeninnendruck bei der Straßenfahrt und der Feldfahrt.

Aus der EP 1 493 599 B1 ist ein Verfahren zur automatischen Reifeninnendruckregelung von Radreifen an einem landwirtschaftlichen Arbeitsfahrzeug bekannt, welches vorsieht, den Reifeninnendruck für einen begrenzten Zeitraum unter einen minimal zulässigen Reifeninnendruck abzusenken, um es beispielsweise zu ermöglichen, in einer Situation auf dem Feld, in der sich das Arbeitsfahrzeug in besonders weichem Untergrund festgefahren hat, selbsttätig zu befreien. Hierzu sind im Speicher einer Steuerungsvorrichtung Sollwertkurven für Reifeninnendrücke verschiedener Reifentypen hinterlegt, welche für eine bestimmte Masse und eine bestimmte Geschwindigkeit einen minimal zulässigen Reifeninnendruck vorgeben.

Die DE 10 2009 025 494 B4 beschreibt ein Verfahren der eingangs genannten Art. Zur Einstellung des Ist-Reifendrucks wird eine Einfederung sensorisch bestimmt und mit gespeicherten Sollwerten für die Einfederung, die Bodeneigenschaften sowie die von dem Arbeitsfahrzeug verursachten Bodendruck berücksichtigt, verglichen. Beim Auftreten einer einen Schwellwert überschreitenden Abweichung von Ist-Reifeninnendruck und Soll-Reifeninnendruck wird durch eine Verstellung des Reifeninnendrucks eine optimale Einfederung der Radreifen eingestellt.

Weitere Verfahren zur automatischen Reifeninnendruckregelung von Radreifen an landwirtschaftlichen Arbeitsfahrzeugen sind bekannt aus US 2018/281535 A1, DE 20 2019 102183 U1 und WO 2020/131539 A1.

Der Erfindung liegt das Problem zu Grunde, das bekannte Verfahren derart auszugestalten und weiterzubilden, dass die Regelung besser auf dynamische Änderungen des Fahrtzustands reagiert, insbesondere auf einen an die jeweilige Fahrsituation optimal angepassten Reifeninnendruck zu regeln.

Das vorstehende Problem wird bei einem Verfahren gemäß dem Oberbegriff von Anspruch 1 durch die Merkmale des kennzeichnenden Teils von Anspruch 1 gelöst.

Gemäß dem Anspruch 1 wird ein Verfahren zur automatischen Reifeninnendruckregelung von Radreifen an einem landwirtschaftlichen Arbeitsfahrzeug vorgeschlagen, mit einer Reifendruckregelanlage, welche von einer Steuerungsvorrichtung des Arbeitsfahrzeugs angesteuert wird, um den Reifeninnendruck der Radreifen in Abhängigkeit von einer Ist-Einfederung und einem Ist-Reifeninnendruck, die sensorisch erfasst werden, einzustellen, wobei ein von der Reifendruckregelanlage einzuhaltender Soll-Reifeninnendruck unter Berücksichtigung eines Fahrzustands, zumindest einer radlastspezifischen Einfederungskennlinie sowie einer von einer Radlast und/oder Bodeneigenschaften abhängigen Soll-Einfederung bestimmt wird. Mittels des erfindungsgemäßen Verfahrens lässt sich der Reifeninnendruck der Radreifen für eine spezifische, insbesondere sich dynamisch ändernde, Betriebssituation optimal einstellen. Eine optimale Einstellung des Reifeninnendruckes liegt vor, wenn der Reifeninnendruck auf einen Wert geregelt wird, welcher im Wesentlichen auf oder unmittelbar unterhalb der Belastungsgrenze der zulässigen Einfederung der Radreifen liegt. Bei dem landwirtschaftlichen Arbeitsfahrzeug kann es sich unter anderem um einen Traktor, eine selbstfahrende Erntemaschine, jeweils mit oder ohne Anbaugerät bzw. Vorsatzgerät, oder beispielsweise auch um ein Gespann aus dem landwirtschaftlichen Arbeitsfahrzeug und einen von dem landwirtschaftlichen Arbeitsfahrzeug gezogenen Anhänger handeln. Hierbei können die Radreifen des Anhängers mit der Reifendruckregelanlage des landwirtschaftlichen Arbeitsfahrzeugs koppelbar sein oder über eine separate Reifendruckregelanlage verfügen, die in erfindungsgemäßer Weise geregelt wird. Das Verfahren dient dazu, den Reifeninnendruck derart zu regeln, dass eine maximale Tragfähigkeit bei konstant gehaltenem Reifeninnendruck oder ein niedrigerer Reifeninnendruck bei konstanter Tragfähigkeit erreicht wird.

Dabei wird der Soll-Reifeninnendruck in Abhängigkeit von wenigstens einer auswählbaren Soll-Einfederungskennlinie vorgegeben.

In einer Speichereinheit der Steuerungsvorrichtung können mehrere fahrgeschwindigkeitsabhängige Soll-Einfederungskennlinien hinterlegt sein. Dabei ist zumindest eine Soll-Einfederungskennlinie für eine Fahrt auf einem zu bearbeitenden Feld und zumindest eine Soll-Einfederungskennlinie für die Straßenfahrt hinterlegt.

Gemäß der Erfindung wird die Soll-Einfederungskennlinie in Abhängigkeit von den Bodeneigenschaften und/oder der Fahrgeschwindigkeit ausgewählt. Bodeneigenschaften können Feuchtigkeit, Bodenbeschaffenheit bzw. Bodenart, Bearbeitungszustand sein. Die Fahrgeschwindigkeit variiert in Abhängigkeit von der Betriebssituation. Bei einer Straßenfahrt sind höhere Geschwindigkeit realisierbar als bei Feldfahrt. Bei der Fahrt auf dem Feld ist zu unterscheiden, welche Art von Arbeitsauftrag mit dem Arbeitsfahrzeug durchgeführt werden soll. Ein mit einem Bodenbearbeitungsgerät wie einem Pflug oder Grubber ausgestattetes Arbeitsfahrzeug wird in der Regel mit einer geringeren Fahrgeschwindigkeit betrieben, als ein als Erntemaschine ausgeführtes Arbeitsfahrzeug mit einem Maisgebiss als Vorsatzgerät.

Gemäß einer bevorzugten Ausführung können zur Reifeninnendruckregelung in der Steuerungsvorrichtung auszuwählende Regelstrategien hinterlegt sein, wobei eine Regelstrategie "Last" auf Änderungen der Radlast des Arbeitsfahrzeugs, eine Regelstrategie "Boden" auf Änderungen von Bodeneigenschaften, eine Regelstrategie "Extremwerte" zur Bestimmung eines Regelbereiches sowie eine Regelstrategie "Dynamisch" bei gleichzeitiger Änderung von Bodeneigenschaften und Radlast angewendet werden kann. Zur Berücksichtigung der unterschiedlichen im Arbeitseinsatz auftretenden Arbeitsbedingungen wird die der jeweiligen Betriebssituation am nächsten kommende Regelstrategie, vorzugsweise automatisch von der Steuerungsvorrichtung, ausgewählt. Abhängig von der ausgewählten Regelstrategie regelt die Steuerungsvorrichtung dann entsprechend den Reifeninnendruck. So ist vorteilhaft gewährleistet, dass ein Bediener des landwirtschaftlichen Arbeitsfahrzeugs von der Überwachung und/oder Einstellung des Reifeninnendrucks entlastet ist und dass der Reifeninnendruck entsprechend der aktuell bestehenden Betriebssituation selbständig auf einen optimierten Reifeninnendruck geregelt wird. Daraus ergibt sich zugleich der Vorteil, dass die Luftbefüllung der Radreifen unabhängig vom Erfahrungsschatz des Bedieners und/oder dessen subjektiver Situationsbeurteilung ist.

Mit der Regelstrategie "Last" kann auf Veränderungen der Radlast reagiert werden, welche beispielsweise aus einer Änderung der Konfiguration des landwirtschaftlichen Arbeitsfahrzeugs oder einer geringeren Zuladung resultieren kann. Beispielsweise kann das als Traktor ausgeführte Arbeitsfahrzeug eine Sämaschine mit sich führen, wobei das Gewicht des geladenen Saatgutes geringer oder höher ist, als angenommen. Eine Änderung der Konfiguration kann auch der Wechsel eines Anbaugerätes sein, wodurch sich die Radlast erhöhen oder absinken kann. Bei einer als Mähdrescher ausgeführten selbstfahrenden Erntemaschine kann der Korntank bewusst geringer befüllt werden als aufgrund des Volumens zulässig. Weiterhin kann eine Änderung eines Arbeitsparameters an einem Bodenbearbeitungswerkzeug, wie einem Pflug oder Grubber, dazu führen, dass es zu einer Veränderung der Radlast am Arbeitsfahrzeug kommt. Entsprechendes gilt, wenn das Arbeitsfahrzeug einen Anhänger, beispielsweise in Form eines Überladewagens oder Güllewagens mit sich führt. In diesen Fällen kann sich die Radlast kontinuierlich ändern. Ein weiterer Aspekt, der zu einer Änderung der Radlast führten kann, ist das Auftreten von signifikantem Schmutzaufbau an dem Arbeitsfahrzeug.

Mit der Regelstrategie "Boden" kann auf Änderungen der Bodeneigenschaften regiert werden. Allgemein kann zwischen hartem Boden und weichem Boden unterschieden werden, beispielsweise bei der Fahrt auf einer asphaltierten Straße oder auf einem zu bearbeitendem Feld. Harter und weicher Boden kann auch auf einem Feld mit inhomogenen Bodeneigenschaften auftreten. Weicher Boden kann weiterhin auf Bachauen oder feuchte Stellen im Feld zurückzuführen sein, was eine Anpassung des Reifeninnendruckes erforderlich werden lässt. Gleiches gilt für das Befahren eines Feldbodens nach einer Bodenbearbeitung, beispielsweise nach dem Pflügen. Harter Boden kann auch beim Befahren von Schotterwegen zwischen zwei Schlägen auftreten, wenn das Arbeitsfahrzeug umgesetzt werden muss.

Die Regelstrategie "Extremwerte" kann zur Bestimmung eines Regelbereiches zur Anwendung kommen, wenn eine Regelung des Reifeninnendruckes innerhalb eines zulässigen Bereiches zwischen einem minimalen Wert und einem maximalen Wert für den Reifeninnendruck erfolgen soll.

Bevorzugt wird die Auswahl einer der Regelstrategien in Abhängigkeit von zumindest einer Parameteränderung einer der Bodeneigenschaften und/oder der Radlast durchgeführt. Eine Änderung einer der Bodeneigenschaften kann mittels zumindest einer Sensorvorrichtung detektiert werden, um beispielsweise einen Wechsel zwischen Straßenfahrt und Feldfahrt zu bestimmen. Eine, insbesondere sprunghafte, Änderung der Radlast kann beispielsweise aus dem An- oder Abbau eines Anbaugerätes oder Vorsatzgerätes resultieren. Der An- oder Abbau eines Anbaugerätes oder Vorsatzgerätes kann dabei beispielsweise durch eine separate Steuereinheit des Arbeitsfahrzeugs bestimmt und an die Steuerungsvorrichtung übertragen werden. Die separate Steuereinheit kann dazu eingerichtet sein, einen An- oder Abbau automatisch zu bestimmen oder durch eine manuelle Eingabe seitens einer Bedienperson. Denkbar ist aber auch, dass die Steuerungsvorrichtung zumindest diese Aufgabe der Steuereinheit wahrnimmt.

Insbesondere kann gemäß der Regelstrategie "Last" bei Detektion einer Änderung der Radlast bei konstanten Bodeneigenschaften und konstantem Ist-Reifeninnendruck der Soll-Reifeninnendruck angepasst werden, bis die Ist-Einfederung einen zumindest annähernd auf der ausgewählten Soll-Einfederungskennlinie liegenden Wert annimmt. Die Soll-Einfederungskennlinie ist dabei entsprechend der bestimmten Bodeneigenschaften, beispielsweise harter Boden oder weicher Boden, ausgewählt. So führt eine Reduzierung der Radlast zu einer Reduzierung der Ist-Einfederung. Bei gleichbleibenden Bodeneigenschaften bleibt dabei die Soll-Einfederungskennlinie unverändert, so dass eine Absenkung des Soll-Reifeninnendruckes durchgeführt wird, bis ein Wertepaar für den Ist-Reifeninnendruck und die Ist-Einfederung erreicht ist, welches zumindest annähernd auf der Soll-Einfederungskennlinie liegt. Eine zunehmende Radlast führt zu einer Erhöhung der Ist-Einfederung. Bei gleichbleibenden Bodeneigenschaften bleibt dabei die Soll-Einfederungskennlinie unverändert, so dass eine Erhöhung des Soll-Reifeninnendruckes durchgeführt wird, bis ein Wertepaar für den Ist-Reifeninnendruck und die Ist-Einfederung erreicht ist, welches zumindest annähernd auf der Soll-Einfederungskennlinie liegt.

Weiterhin kann gemäß der Regelstrategie "Boden" bei Detektion einer Änderung einer der Bodeneigenschaften bei konstanter Radlast und konstantem Ist-Reifeninnendruck eine adaptierte Soll-Einfederungskennlinie zur Regelung bestimmt werden. Als Reaktion auf eine Änderung zumindest einer Bodeneigenschaft bei konstanter Radlast, beispielsweise bei einem Wechsel der Bodenbeschaffenheit von einem härteren Boden hin zu einem weicheren Boden während der Feldfahrt, wie dem Erreichen einer feuchten Stelle, kann eine adaptierte Soll-Einfederungskennlinie anhand einer für die geänderte Bodeneigenschaft bekannten Soll-Einfederung bei konstanter Radlast vorgegeben werden. Bei gleichbleibenden Radlast wird auf die adaptierte Soll-Einfederungskennlinie geregelt, so dass eine Absenkung des Soll-Reifeninnendruckes durchgeführt wird, bis ein Wertepaar für den Ist-Reifeninnendruck und die bekannt für die Bodeneigenschaft bekannte Soll-Einfederung erreicht ist, welches zumindest annähernd auf der adaptierten Soll-Einfederungskennlinie liegt. Diese Anpassung der Soll-Einfederungskennlinie wird bei konstanter Radlast und konstantem Ist-Reifeninnendruck analog bei einem Übergang von einem weicheren zu einem härteren Boden in analoger Weise durchgeführt.

Gemäß einer Weiterbildung kann die adaptierte Soll-Einfederungskennlinie in Abhängigkeit von einer für die geänderte Bodeneigenschaft spezifischen Soll-Einfederung bei konstanter Radlast vorgegeben werden.

Insbesondere kann durch die Bestimmung einer Änderung der Ist-Einfederung bei konstanter Radlast und konstantem Ist-Reifeninnendruck eine Änderung einer Bodeneigenschaft abgeleitet werden, und es kann aus der abgeleiteten Änderung der Bodeneigenschaft eine adaptierte Soll-Einfederungskennlinie bestimmt werden, anhand der ein optimierter Soll-Reifeninnendruck bestimmt wird, der an die geänderte Betriebssituation aufgrund der Änderung der Bodeneigenschaft abgestimmt ist.

Eine bevorzugte Ausführung sieht vor, dass gemäß der Regelstrategie "Extremwerte" Radlast-Reifeninnendruck-Kennlinien als Begrenzungen eines Regelbereiches unterhalb der Soll-Einfederungskennlinie vorgegeben werden, wobei innerhalb des Regelbereiches der Soll-Reifeninnendruck vorgegeben wird. Hierdurch kann die Regelung des Reifeninnendruckes dahingehend angepasst werden, dass der Betrieb des Arbeitsfahrzeugs stets in einem zulässigen Bereich für die Tragfähigkeit und die Bodenbelastung erfolgt.

Des Weiteren kann gemäß der Regelstrategie "Dynamisch" bei einem gleichzeitigen Auftreten von Änderungen der Radlast und einer der Bodeneigenschaften in einem ersten Schritt die bisherige Soll-Einfederungskennlinie in Abhängigkeit von einer Änderung der Bodeneigenschaft, die mittels einer Änderung der Ist-Einfederung bestimmt wird, eine der geänderten Bodeneigenschaft entsprechend adaptierte Einfederungskennlinie bestimmt werden, in einem zweiten Schritt kann in Abhängigkeit von einer quantitativ bestimmten Änderung der Radlast eine korrespondierende Einfederungskennlinie unter Annahme einer konstanten Bodeneigenschaft bei geänderter Radlast bestimmt werden, und in einem dritten Schritt kann ein Vergleich zwischen dem eingestellten Soll-Reifeninnendruck gemäß der Soll-Einfederungskennlinie vor der Änderung von Radlast und Bodeneigenschaft und einem zu erwartenden Soll-Reifeninnendruck gemäß der Einfederungskennlinie nach der Bestimmten Änderung der Radlast durchgeführt werden, so dass eine daraus resultierende Verschiebung zwischen der Einfederungskennlinie und der Einfederungskennlinie zur Verschiebung der Soll-Einfederungskennlinie gegenüber der Soll-Einfederungskennlinie herangezogen werden kann. Auf diese Weise lassen sich eine gleichzeitige Änderung von Radlast und Bodeneigenschaft bei der Reifeninnendruckregelung berücksichtigen.

Bevorzugt kann eine Änderung einer Bodeneigenschaft mittels zumindest einer Sensoreinrichtung oder durch eine manuelle Eingabe über eine Eingabeeinheit der Steuerungsvorrichtung bestimmt werden. Die zumindest eine Sensoreinrichtung zur Bestimmung von Bodeneigenschaften kann beispielsweise optisch basierend arbeiten. Alternativ oder zusätzlich kann ein Penetrometer als eine Sensoreinrichtung zur Bestimmung von Bodeneigenschaften verwendet werden.

Weiter bevorzugt kann eine Änderung der Radlast mittels zumindest einer Sensoreinrichtung und/oder eine Änderung der Konfiguration des Arbeitsfahrzeugs, die von einer Sensoreinrichtung automatisch bestimmt und/oder manuell über eine Eingabeeinheit der Steuerungsvorrichtung an diese übermittelt wird, erfasst werden. Beispielsweise kann das An- oder Abbauen eines Anbaugerätes bzw. Vorsatzgerätes als eine Änderung der Konfiguration detektiert werden. Bei einem Arbeitsfahrzeug mit einem daran angeordneten Speicher für Erntegut, Dünger Saat oder dergleichen, kann durch eine Füllstandüberwachung oder Gewichtsbestimmung eine Änderung des Inhalts bestimmt werden, die sich auf die Radlast auswirkt.

Weiterhin kann die Bestimmung der Ist-Einfederung unmittelbar durch zumindest eine den Radreifen zugeordnete Sensoreinrichtung oder mittelbar durch ein mathematisches Modell durchgeführt werden. Dabei kann die zumindest eine Sensoreinrichtung zur Bestimmung der Ist-Einfederung dazu eingerichtet sein, die Ist-Einfederung mittels akustischer Messverfahren wie Ultraschallmessung, optischer Messverfahren wie Lasermessung oder mittels einer Kamera, elektrischer Messverfahren wie mittels Dehnungsmessstreifen oder piezoelektrische Sensoren, magnetischer Messverfahren zu bestimmen. Die eingangs gestellte Aufgabe wird weiterhin durch ein landwirtschaftliches Arbeitsfahrzeug gemäß dem Anspruch 13 gelöst, umfassend eine Reifendruckregelanlage zur automatischen Reifeninnendruckregelung von Radreifen, eine Steuerungsvorrichtung mit einer Recheneinheit und einer Speichereinheit zur Ansteuerung der Reifendruckregelanlage, Sensoreinrichtungen zur Erfassung einer Ist-Einfederung und eines Ist-Reifeninnendruckes der Radreifen, ausgestaltet zur Verwendung in einem Verfahren nach einem der vorhergehenden Ansprüche. Das landwirtschaftliche Arbeitsfahrzeug kann als Traktor oder als selbstfahrende Erntemaschinen ausgeführt sein.

Die vorliegende Erfindung wird nachstehend anhand eines in den Zeichnungen dargestellten Ausführungsbeispieles näher erläutert.

Es zeigen:
- Fig. 1: eine schematische Darstellung eines landwirtschaftlichen Arbeitsfahrzeugs mit einer Reifendruckregelanlage;
- Fig. 2: eine vereinfachte Übersicht eines Regelvorgangs;
- Fig. 3: exemplarisch ein Einfederungs-Druck-Diagramm für einen Anwendungsfall gemäß einer Regelstrategie "Last";
- Fig. 4: exemplarisch ein Einfederungs-Druck-Diagramm für einen Anwendungsfall gemäß einer Regelstrategie "Boden";
- Fig. 5: exemplarisch ein Einfederungs-Druck-Diagramm für einen Anwendungsfall gemäß einer Regelstrategie "Extremwerte"; und
- Fig. 6a, 6b: exemplarisch ein Einfederungs-Druck-Diagramm für einen Anwendungsfall gemäß einer Regelstrategie "Dynamisch".

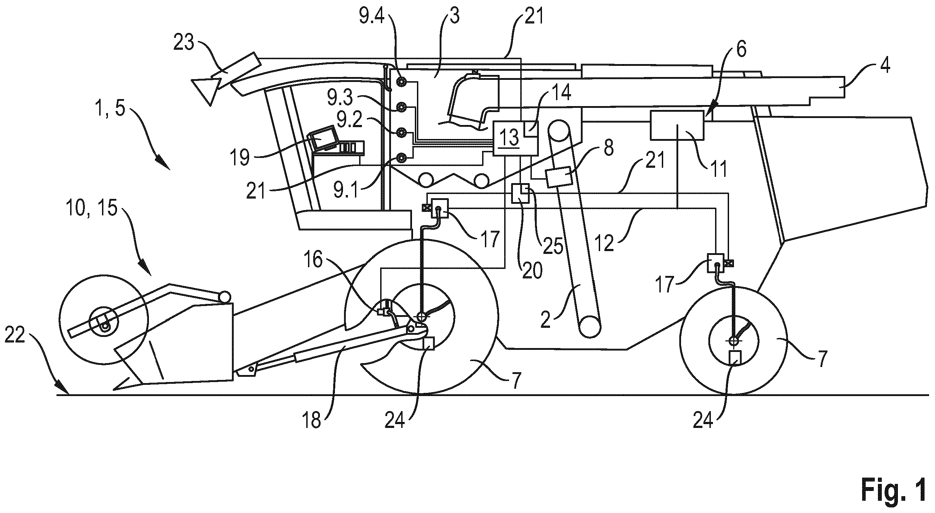

In Fig. 1 ist ein als selbstfahrende Erntemaschine, hier ein Mähdrescher 1a, ausgeführtes landwirtschaftliches Arbeitsfahrzeug 1 dargestellt. Das landwirtschaftliche Arbeitsfahrzeug kann auch als ein Traktor ausgeführt sein. Der Mähdrescher 5 ist mit einer Reifendruckregelanlage 6 ausgestattet, mit welcher der Reifeninnendruck von luftgefüllten Radreifen 7 verändert werden kann. Diese Reifendruckregelanlage 6 besteht aus einem Druckluftkompressor 11 als Druckquelle, welcher über Zuleitungen 12 mit den Radreifen 7 verbunden ist. In den Zuleitungen 12 sind verstellbare Ventile 17 eingebaut, die ein kontrolliertes Befüllen und Entleeren des Radreifens 7 bzw. ein Halten des Reifeninnendrucks ermöglichen. Die Ventile 17 sind an eine Steuerungsvorrichtung 20 angeschlossen, welche die Stellung der Ventile 17 regelt. Mit Hilfe der Steuereinheit 20 wird der Reifeninnendruck in Abhängigkeit von der Maschinenmasse des Mähdreschers 1 geregelt, wie später näher erläutert wird.

Durch eine Eingabe-Ausgabeeinheit 19, welche mit einer Steuereinheit 13 durch ein Kommunikationsmittel 21 wie ein drahtloses oder drahtgebundenes Bussystem verbunden ist, können beispielsweise spezifische Daten der an dem Mähdrescher 1 angebauten Radreifen 7 sowie Informationen über Art und Gewicht eines angebauten Vorsatzgerätes 10, welches gemäß dem Ausführungsbeispiel als Schneidwerk 15 ausgeführt ist, eingegeben. Alternativ kann die Masse des Vorsatzgerätes 10 auch mit Drucksensoren 16 an einer Stützhydraulik 18 für das Vorsatzgerät 10 gemessen werden. Mittels der Eingabe-Ausgabeeinheit 19 lassen sich auch Informationen zu aktuellen und/oder geänderten Bodeneigenschaften 31 manuell durch einen Bediener eingeben.

Von dem Mähdrescher 5a mit dem Vorsatzgerät 10 vom Feldboden 22 aufgenommenes Erntegut wird durch einen Kornelevator 2 in einen Korntank 3 im Mähdrescher 5 gefördert, wo das Erntegut zwischengelagert wird. Ist der Korntank 3 befüllt, wird das Erntegut mittels einer Überladevorrichtung 4 in einen Ladewagen (nicht dargestellt) überladen.

In dem Kornelevator 2 ist wenigstens eine Sensoreinrichtung 8 angeordnet, die ein in einem begrenzten Zeitraum in den Korntank 3 gefördertes Volumen an Erntegut erfasst und/oder zur Bestimmung eines Massenstromes eingerichtet ist und ein zugehöriges Signal generiert. In dem Korntank 3 können in verschiedenen Höhen Füllstandsensoren 9.1, 9.2, 9.3, 9.4 angeordnet sein, die den Füllstand bei beispielsweise 20%, 70%, 100% sowie leerem Korntank 3 detektieren und ein zugehöriges Signal generieren. Die Sensoren 8, 9.1, 9.2, 9.3, 9.4, 16 sind ebenfalls mit der Steuereinheit 13 verbunden. Anhand des bekannten Leergewichts des Mähdreschers 5, des mittels der wenigstens einen Sensoreinrichtung 8 bestimmten Gewichts des im Korntank 3 befindlichen Erntegutes und des bestimmten Gewichts des an den Mähdrescher 5 adaptierten Vorsatzgerätes 10 lässt sich eine jeweilige an den Radreifen 7 auftretende Radlast 30 bestimmen.

Die Steuereinheit 13 ist mit der Steuerungsvorrichtung 20 der Reifendruckregelanlage 6 verbunden, die den Reifeninnendruck in Abhängigkeit von einem von der Steuerungsvorrichtung 20 generierten Signal ändert. Die Steuereinheit 13 kann auch die Funktion der Steuerungsvorrichtung 20 übernehmen bzw. umgekehrt, so dass nur eine Steuerungsvorrichtung erforderlich ist. An dem Mähdrescher 5 ist zumindest eine Sensoreinrichtung 23 angeordnet, die zur Bestimmung von wenigstens einer Bodeneigenschaft eingerichtet ist. Die zumindest eine Sensoreinrichtung 23 ist mit der Steuereinheit 13 und/oder der Steuerungsvorrichtung 20 verbunden, so dass durch eine Auswertung der Signale der zumindest einen Sensoreinrichtung 23 eine Änderung einer Bodeneigenschaft 31 bestimmt werden kann. Weiterhin ist jedem Radreifen 7 eine Sensoreinrichtung 24 zugeordnet, mittels eine Ist-Einfederung 28 bestimmt werden kann. Die Bestimmung der Ist-Einfederung 28 erfolgt unmittelbar durch die jeweilige den Radreifen 7 zugeordnete Sensoreinrichtung 24 oder mittelbar durch ein mathematisches Modell, welches in einer Speichereinheit 25 der Steuerungsvorrichtung 20 und/oder einer Speichereinheit 14 der Steuereinheit 13 hinterlegt ist.

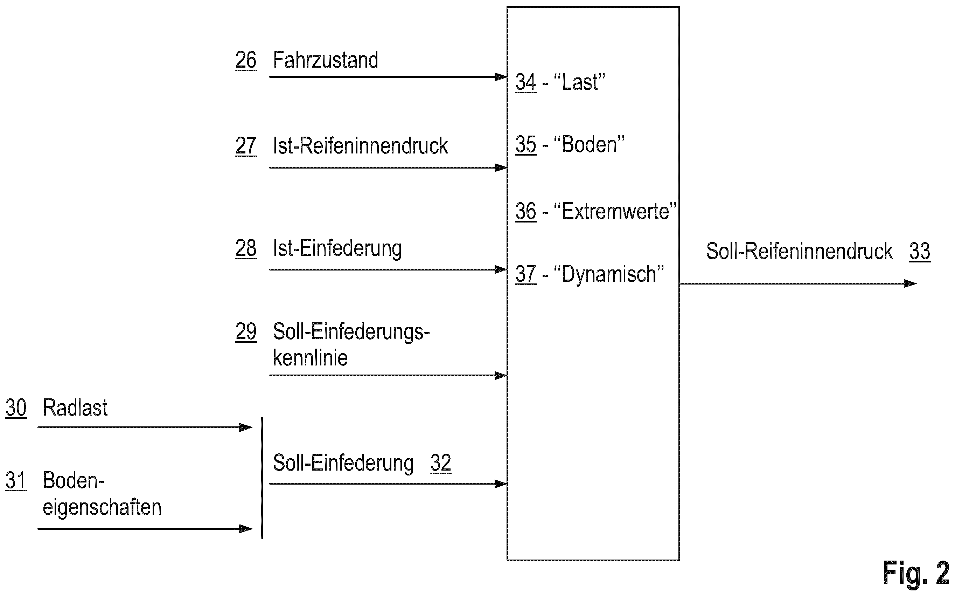

In Fig. 2 ist eine vereinfachte Übersicht eines Regelvorgangs zur Einstellung eines Soll-Reifeninnendrucks 33 dargestellt. Eingangsgrößen sind ein Fahrzustand 26, insbesondere die Fahrgeschwindigkeit des Arbeitsfahrzeugs 1 sowie die generelle Unterscheidung zwischen Straßenfahrt und Feldfahrt, der sensorisch bestimmte Ist-Reifeninnendruck 27, die sensorisch bestimmte Ist-Einfederung 28, eine Soll-Einfederungskennlinie 29, die aktuelle Radlast 30 und/oder die aktuellen Bodeneigenschaften 31. Aus der aktuellen Radlast 30 und/oder den aktuellen Bodeneigenschaften 31 kann eine Soll-Einfederung 32 bestimmt werden, die für die jeweilige Radlast 30 und die Bodeneigenschaften 31 spezifisch ist. So wird ein von der Reifendruckregelanlage 6 einzustellender und aufrecht zu erhaltender Soll-Reifeninnendruck 33 unter Berücksichtigung der Fahrgeschwindigkeit 26, der Soll-Einfederungskennlinie 29 sowie einer von der Radlast 30 und/oder Bodeneigenschaften 31 abhängigen Soll-Einfederung 32 bestimmt.

Verschiedene Soll-Einfederungskennlinien 29 sind in der Speichereinheit 25 der Steuerungsvorrichtung 20 und/oder der Speichereinheit 14 der Steuereinheit 13 abrufbar hinterlegt. Der Soll-Reifeninnendruck 33 wird in Abhängigkeit von wenigstens einer auswählbaren Soll-Einfederungskennlinie 29 vorgegeben. Die Soll-Einfederungskennlinie 29 wird in Abhängigkeit von den bestimmten Bodeneigenschaften 31 und/oder der aktuellen Fahrgeschwindigkeit ausgewählt.

Zur Reifeninnendruckregelung sind in der Steuerungsvorrichtung 20 auszuwählende Regelstrategien 34, 35, 36, 37 hinterlegt sind, wobei eine Regelstrategie 34 "Last" auf Änderungen der Radlast 30 des Arbeitsfahrzeugs 1, eine Regelstrategie 35 "Boden" auf Änderungen von Bodeneigenschaften 31, eine Regelstrategie 36 "Extremwerte" zur Bestimmung eines Regelbereiches sowie eine Regelstrategie 37 "Dynamisch" bei gleichzeitiger Änderung von Bodeneigenschaften 31 und Radlast 30 angewendet wird. Die Auswahl erfolgt bevorzugt automatisch durch die Steuerungsvorrichtung 20 anhand einer detektierten Parameteränderung für die Radlast 30 oder eine der Bodeneigenschaften 31 bzw. eine gleichzeitige Änderung von Radlast 30 und einer der Bodeneigenschaften 31.

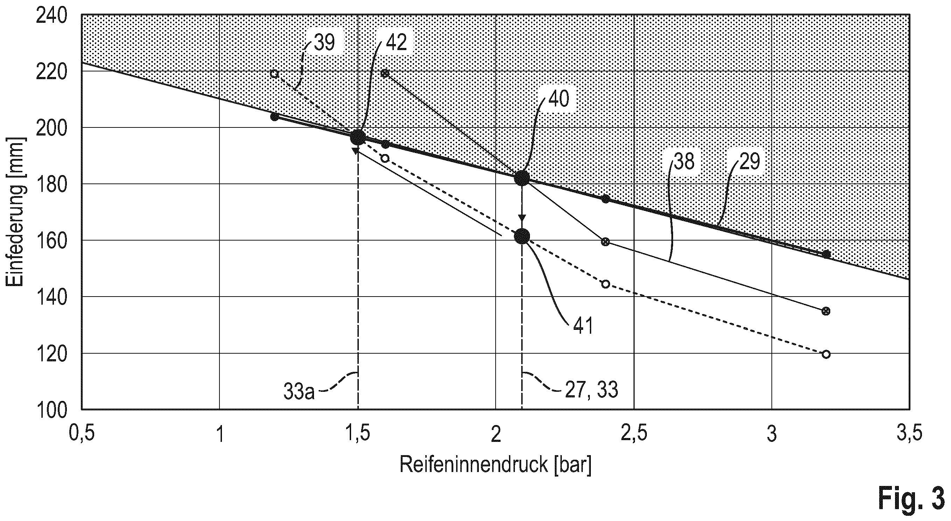

Die Darstellung in Fig. 3 zeigt exemplarisch ein Einfederungs-Druck-Diagramm für einen Anwendungsfall gemäß der Regelstrategie 34 "Last". Die Regelstrategie 34 "Last" kommt zum Tragen, wenn eine Änderung der Radlast 30 bestimmt wird, beispielsweise durch einen An- oder Abbau des Vorsatzgerätes 10 oder das Befüllen oder Entleeren des Korntanks 3.

Dargestellt sind in Fig. 3 die Soll-Einfederungskennlinie 29, welche die Belastungsgrenze für eine zulässige Ist-Einfederung 28 des Radreifens 7 bei gegebenem Ist-Reifeninnendruck 27 darstellt. Oberhalb der Soll-Einfederungskennlinie 29 befindet sich der Bereich, innerhalb dessen die Konditionen für den Betrieb der Radreifen 7 unzulässig sind. Weiterhin sind eine erste Einfederungskennlinie 38 für eine spezifische Radlast 30 und eine zweite Einfederungskennlinie 39 für eine geringere Radlast 30 dargestellt. Unmittelbar vor einer Änderung der Radlast 30 liegt das Wertepaar aus Ist-Reifeninnendruck 27 und Ist-Einfederung 28 im optimalen Fall unmittelbar auf der Soll-Einfederungskennlinie 29 im Arbeitspunkt 40. Der Arbeitspunkt 40 befindet sich im Schnittpunkt der ersten Einfederungskennlinie 38 und der Soll-Einfederungskennlinie 29. Dabei entspricht der Ist-Reifeninnendruck 27 dem Soll-Reifeninnendruck 33, der sich entsprechend der Soll-Einfederungskennlinie 29 einstellt. Bei einer Reduzierung der Radlast 30 stellt sich ein neuer Arbeitspunkt 41 ein, der bei gleichbleibendem Ist-Reifeninnendruck 27 auf der zweiten Einfederungskennlinie 39 unterhalb des vorherigen Arbeitspunktes 40 liegt.

Gemäß der Regelstrategie 34 "Last" wird bei Detektion einer Änderung der Radlast 30 bei ansonsten konstanten Bodeneigenschaften 31 und konstantem Ist-Reifeninnendruck 27 der Soll-Reifeninnendruck 33 angepasst, bis die Ist-Einfederung 28 zumindest annähernd einen auf der ausgewählten Soll-Einfederungskennlinie 29 liegenden Wert, hier einen neuen Arbeitspunkt 42, annimmt, welcher sich im optimalen Fall im Schnittpunkt der zweiten Einfederungskennlinie 39 und der Soll-Einfederungskennlinie 29 befindet. Im dargestellten Ausführungsbeispiel wird dies bei der Reduzierung der Radlast 30 durch die Absenkung des Ist-Reifeninnendruckes 27 auf einen an die geänderte Radlast 30 angepassten Soll-Reifeninnendruck 33a erreicht. Eine Erhöhung der Radlast 30 führt dazu, dass der Ist-Reifeninnendruckes 27 in analoger Weise an die neuen Gegebenheiten durch einen daran angepassten Soll-Reifeninnendruck 33a angepasst wird.

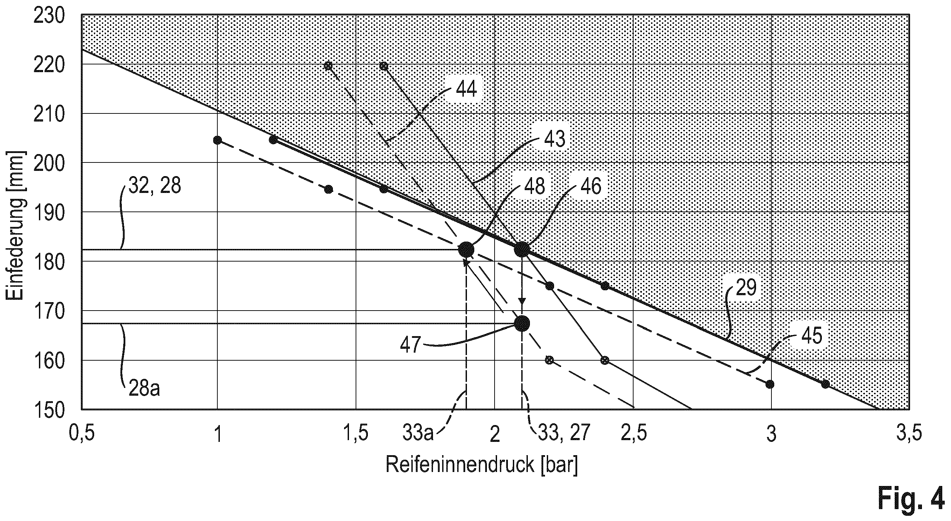

Die Darstellung in Fig. 4 zeigt exemplarisch ein Einfederungs-Druck-Diagramm für einen Anwendungsfall gemäß der Regelstrategie 35 "Boden". Mit der Regelstrategie 35 "Boden" kann auf Änderungen der Bodeneigenschaften 31 regiert werden. Allgemein kann zwischen hartem Boden und weichem Boden unterschieden werden, beispielsweise bei der Fahrt auf einer asphaltierten Straße oder auf einem zu bearbeitendem Feld. Harter und weicher Boden kann auch auf einem Feld mit inhomogenen Bodeneigenschaften 31 auftreten. Weicher Boden kann weiterhin auf Bachauen oder feuchte Stellen im Feld zurückzuführen sein, was eine Anpassung des Reifeninnendruckes erforderlich werden lässt. Gleiches gilt für das Befahren eines Feldbodens 22 nach einer Bodenbearbeitung, beispielsweise nach dem Pflügen. Harter Boden kann auch beim Befahren von Schotterwegen zwischen zwei Schlägen auftreten, wenn das Arbeitsfahrzeug 1 umgesetzt werden muss.

Dargestellt sind in Fig. 4 die Soll-Einfederungskennlinie 29, welche die Belastungsgrenze für eine zulässige Ist-Einfederung 28 des Radreifens 7 bei gegebenem Ist-Reifeninnendruck 27 darstellt. Die Soll-Einfederungskennlinie 29 stellt die Belastungsgrenze für einen harten Boden bei konstanter Radlast 30 dar. Für einen weicheren Boden ist exemplarisch eine adaptierte zweite Soll-Einfederungskennlinie 45 als Belastungsgrenze bei konstanter Radlast 30 dargestellt. Weiterhin sind eine erste Einfederungskennlinie 43 für eine konstante Radlast 30 und hartem Boden als Bodeneigenschaft 31 und eine zweite Einfederungskennlinie 44 für dieselbe Radlast 30 und weicherem Boden als Bodeneigenschaft 31 dargestellt.

Unmittelbar vor einer Änderung einer Bodeneigenschaft 31, durch Übergang von einem härteren Boden auf einen weicheren Boden, liegt das Wertepaar aus Ist-Reifeninnendruck 27 und Ist-Einfederung 28 im optimalen Fall unmittelbar auf der Soll-Einfederungskennlinie 29 im Arbeitspunkt 46, wobei die Ist-Einfederung 28 dann der Soll-Einfederung 32 entspricht. Bedingt durch den Übergang auf einen weicheren Boden nimmt die Ist-Einfederung 28 auf eine geringere Ist-Einfederung 28a ab, so dass sich ein neuer Arbeitspunkt 47 einstellt, der bei gleichbleibendem Ist-Reifeninnendruck 27 auf der zweiten Einfederungskennlinie 44 unterhalb des vorherigen Arbeitspunktes 46 liegt.

Gemäß der Regelstrategie 34 "Boden" wird bei Detektion einer Änderung der Bodeneigenschaften 31 bei ansonsten konstanter Radlast 30 und konstantem Ist-Reifeninnendruck 27 der Soll-Reifeninnendruck 33 angepasst, indem die adaptierte Soll-Einfederungskennlinie 45 zur Regelung verwendet wird. Als Reaktion auf die Änderung zumindest einer Bodeneigenschaft 31 bei konstanter Radlast 30, beispielsweise bei einem Wechsel der Bodenbeschaffenheit von einem härteren Boden hin zu einem weicheren Boden während der Feldfahrt, wie dem Erreichen einer feuchten Stelle, wird die adaptierte Soll-Einfederungskennlinie 45 anhand einer für die geänderte Bodeneigenschaft 31 bekannten Soll-Einfederung 28 bei konstanter Radlast 30 durch Auswahl aus in der Speichereinheit 14 bzw. 25 hinterlegten Soll-Einfederungskennlinien vorgegeben. Bei gleichbleibenden Radlast 30 wird auf die adaptierte Soll-Einfederungskennlinie 45 geregelt, so dass eine Absenkung des konstantem Ist-Reifeninnendruck 27 auf einen neuen Soll-Reifeninnendruck 33a durchgeführt wird, bis ein Wertepaar für den Ist-Reifeninnendruck 27 und die für die Bodeneigenschaft bekannte Soll-Einfederung 28 erreicht ist, welches zumindest annähernd auf der adaptierten Soll-Einfederungskennlinie 45 liegt, hier dem angepassten Arbeitspunkt 48. Diese Anpassung der Soll-Einfederungskennlinie 45 wird bei konstanter Radlast 30 und konstantem Ist-Reifeninnendruck 27 bei einem Übergang von einem weicheren zu einem härteren Boden in analoger Weise durchgeführt.

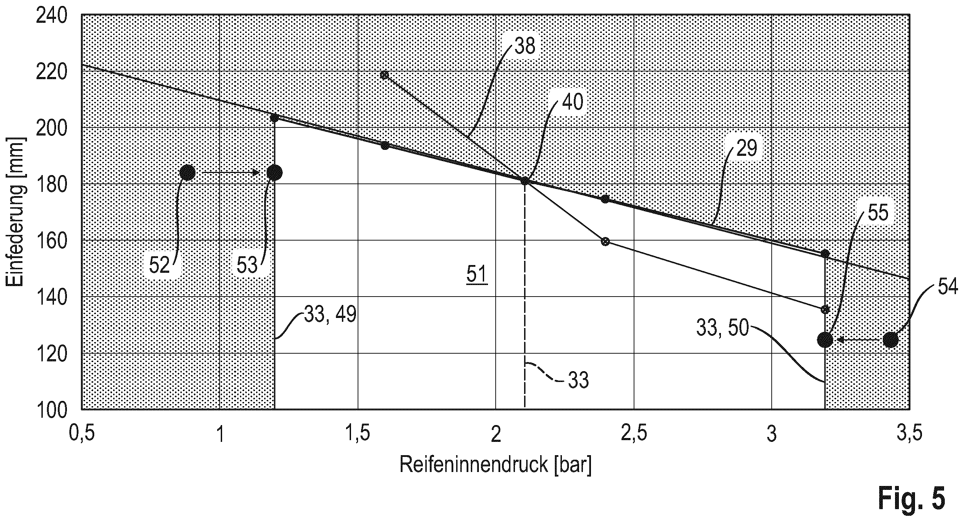

Die Darstellung in Fig. 5 zeigt exemplarisch ein Einfederungs-Druck-Diagramm für einen Anwendungsfall gemäß der Regelstrategie 36 "Extremwerte". Die Regelstrategie 36 "Extremwerte" kann zur Bestimmung eines Regelbereiches 51 zur Anwendung kommen, wenn eine Regelung des Reifeninnendruckes innerhalb eines zulässigen Bereiches zwischen einem minimalen Wert 49 als untere Grenze und einem maximalen Wert 50 als obere Grenze für den Ist-Reifeninnendruck 27 erfolgen soll. Der Regelbereich 51 wird durch die Soll-Einfederungskennlinie 29 sowie den minimalen Wert 49 und den maximalen Wert 50 für den als Soll-Reifeninnendruck 33 einzustellenden Ist-Reifeninnendruck 27 vorgegeben. Beispielhaft ist ein Arbeitspunkt 52 dargestellt, bei welchem der Ist-Reifeninnendruck 27 außerhalb des Regelbereichs 51 liegt. Der Ist-Reifeninnendruck 27 im Arbeitspunkt 52 ist für die sensorisch bestimmte Ist-Einfederung 28 für einen zulässigen Betrieb der Radreifen 7 zu gering, so dass eine Erhöhung des Soll-Reifeninnendrucks 33 durchgeführt wird, bis ein Arbeitspunkt 53 erreicht ist, welcher zumindest auf der unteren Grenze des Regelbereichs 51 liegt. Der Ist-Reifeninnendruck 27 im Arbeitspunkt 54 ist für die sensorisch bestimmte Ist-Einfederung 28 zu hoch, so dass eine Absenkung des Soll-Reifeninnendrucks 33 durchgeführt wird, bis ein Arbeitspunkt 55 erreicht ist, welcher zumindest auf der oberen Grenze des Regelbereichs 51 liegt. Hierdurch wird eine Regelung des Reifeninnendruckes erreicht, die stets unter vorherrschenden Betriebsbedingungen im für den Betrieb der Radreifen 7 zulässigen Bereich liegt. Beispielhaft ist der Arbeitspunkt 40 dargestellt, welcher auf der Soll-Einfederungskennlinie 29 liegt und in dem der optimale Soll-Reifeninnendruck 33 gegeben ist.

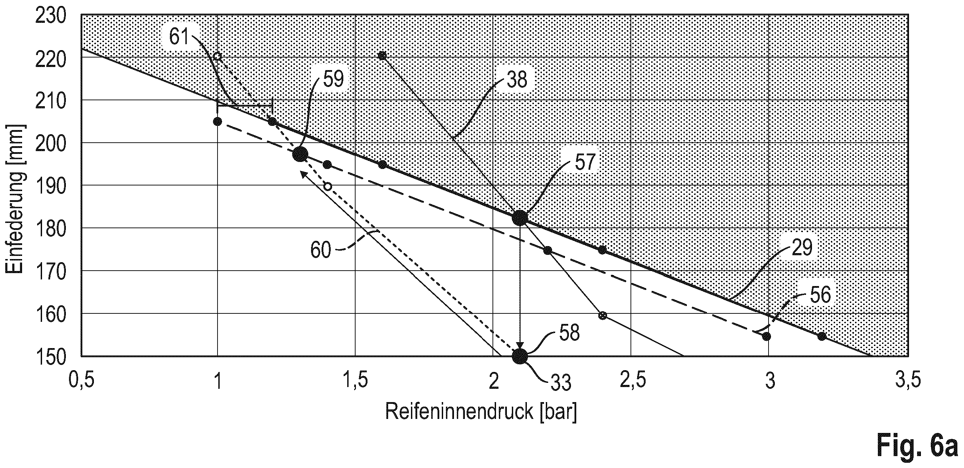

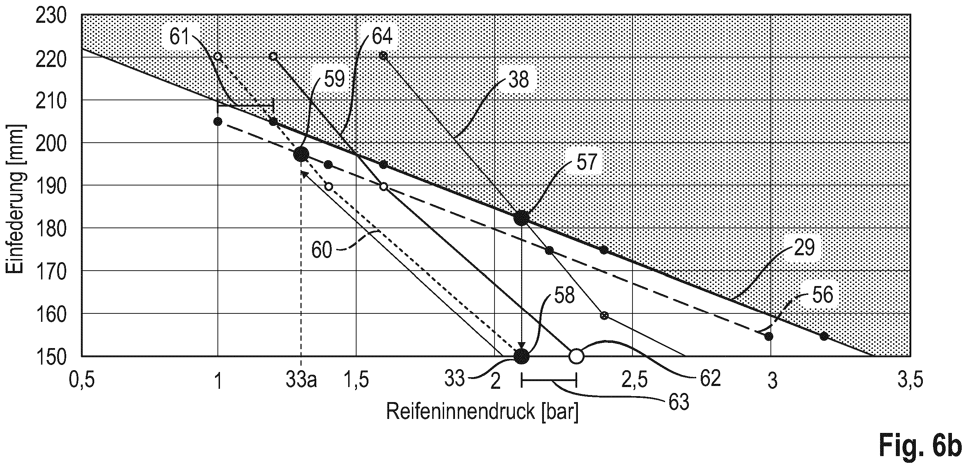

In den Fig. 6a und 6b ist exemplarisch ein Einfederungs-Druck-Diagramm für einen Anwendungsfall gemäß einer Regelstrategie "Dynamisch" dargestellt. Mit der Regelstrategie "Dynamisch" wird bei einem gleichzeitigen Auftreten von Änderungen der Radlast 30 und einer der Bodeneigenschaften 31 in einem ersten Schritt die bisherige Soll-Einfederungskennlinie 29 in Abhängigkeit von einer Änderung der Bodeneigenschaft 31, die mittels einer Änderung der Ist-Einfederung 28 bestimmt wird, eine der geänderten Bodeneigenschaft 31 entsprechende zweite Soll-Einfederungskennlinie 56 bestimmt. Die zweite Soll-Einfederungskennlinie 56 ist um einen zu bestimmenden Betrag 61 gegenüber der bisherigen Soll-Einfederungskennlinie 29 parallel verschoben. Ausgehend vom Arbeitspunkt 57, der im Schnittpunkt von Soll-Einfederungskennlinie 29 und der Einfederungskennlinie 38 für eine spezifische Radlast 30 und hartem Boden liegt, führen eine zeitgleiche Änderung der Radlast 30 hin zu einer im dargestellten Ausführungsbeispiel reduzierten Radlast und der Bodeneigenschaften 31 vom harten Boden hin zu einem weicheren Boden bei konstantem Ist-Reifeninnendruck 27 dazu, dass sich ein neuer Arbeitspunkt 58 einstellt. Der Arbeitspunkt 58 liegt auf einer Einfederungskennlinie 60 für weicheren Boden bei reduzierter Radlast 30.

In einem zweiten Schritt wird in Abhängigkeit von einer quantitativ bestimmten Änderung der Radlast 30 eine korrespondierende Einfederungskennlinie 64 für die konstant gehaltene Bodeneigenschaft 31, d.h. den harten Boden, bei reduzierter Radlast 30 bestimmt. Daraufhin wird ein Vergleich zwischen dem ursprünglich eingestellten Soll-Reifeninnendruck 33 gemäß der Soll-Einfederungskennlinie 29 vor der Änderung der Bodeneigenschaft 31 und einem zu erwartenden Soll-Reifeninnendruck 62 gemäß der Einfederungskennlinie 64 nach der bestimmten Änderung der Radlast 30 durchgeführt. Eine daraus resultierende Verschiebung 63 zwischen der Einfederungskennlinie 38 und der Einfederungskennlinie 64 wird zur Verschiebung der Soll-Einfederungskennlinie 56 gegenüber der ursprünglichen Soll-Einfederungskennlinie 29 herangezogen. Hierzu wird in einem dritten Schritt die bisherige Soll-Einfederungskennlinie 29 um den anhand der Druckdifferenz bestimmten Betrag zwecks Adaption des Soll-Reifeninnendrucks 33 parallel verschoben werden. Auf diese Weise lassen sich eine gleichzeitige Änderung von Radlast 30 und Bodeneigenschaft 31 bei der Reifeninnendruckregelung berücksichtigen. Es stellt sich ein neuer Arbeitspunkt 59 ein, der im Schnittpunkt der Soll-Einfederungskennlinie 56 und der Einfederungskennlinie 60 liegt. Daraus resultiert ein neuer, im vorliegenden Fall niedrigerer Soll-Reifeninnendruck 33a. Mittels der Regelstrategie 37 "Dynamisch" lassen sich die Einflüsse auf die Einfederung und den Reifeninnendruck durch eine gleichzeitige Änderung von Radlast und Bodeneigenschaft bei der Bestimmung und Einstellung des optimalen Soll-Reifeninnendruckes berücksichtigen.

**Bezugszeichenliste**

| | | | |
|---|---|---|---|
| 1 | Arbeitsfahrzeug | 30 | Radlast |
| 2 | Kornelevator | 31 | Bodeneigenschaft |
| 3 | Korntank | 32 | Soll-Einfederung |
| 4 | Überladevorrichtung | 33 | Soll-Reifeninnendruck |
| 5 | Mähdrescher | 33a | Soll-Reifeninnendruck |
| 6 | Reifendruckregelanlage | 34 | Regelstrategie "Last" |
| 7 | Radreifen | 35 | Regelstrategie "Boden" |
| 8 | Sensoreinrichtung | 36 | Regelstrategie "Extremwerte" |
| 9.1 | Füllstandsensor | 37 | Regelstrategie "Dynamisch" |
| 9.2 | Füllstandsensor | 38 | Einfederungskennlinie |
| 9.3 | Füllstandsensor | 39 | Einfederungskennlinie |
| 9.4 | Füllstandsensor | 40 | Arbeitspunkt |
| 10 | Vorsatzgerät | 41 | Arbeitspunkt |
| 11 | Druckluftkompressor | 42 | Arbeitspunkt |
| 12 | Zuleitung | 43 | Einfederungskennlinie |
| 13 | Steuereinheit | 44 | Einfederungskennlinie |
| 14 | Speichereinheit | 45 | Soll-Einfederungskennlinie |
| 15 | Schneidwerk | 46 | Arbeitspunkt |
| 16 | Drucksensor | 47 | Arbeitspunkt |
| 17 | Ventil | 48 | Arbeitspunkt |
| 18 | Stützhydraulik | 49 | Minimaler Wert |
| 19 | Eingabe-Ausgabeeinheit | 50 | Maximaler Wert |
| 20 | Steuereinheit | 51 | Regelbereich |
| 21 | Kommunikationsmittel | 52 | Arbeitspunkt |
| 22 | Feldboden | 53 | Arbeitspunkt |
| 23 | Sensoreinrichtung | 54 | Arbeitspunkt |
| 24 | Sensoreinrichtung | 55 | Arbeitspunkt |
| 25 | Speichereinheit | 56 | Soll-Einfederungskennlinie |
| 26 | Fahrzustand | 57 | Arbeitspunkt |
| 27 | Ist-Reifeninnendruck | 58 | Arbeitspunkt |
| 28 | Ist-Einfederung | 59 | Arbeitspunkt |
| 28a | Ist-Einfederung | 60 | Einfederungskennlinie |
| 29 | Soll-Einfederungskennlinie | 61 | Betrag |
| 62 | Soll-Reifeninnendruck | | |
| 63 | Verschiebung | | |
| 64 | Einfederungskennlinie | | |

## Patentansprüche

1. Verfahren zur automatischen Reifeninnendruckregelung von Radreifen (7) an einem landwirtschaftlichen Arbeitsfahrzeug (1, 5), mit einer Reifendruckregelanlage (6), welche von einer Steuerungsvorrichtung (20) angesteuert wird, um den Reifeninnendruck der Radreifen (7) in Abhängigkeit von einer Ist-Einfederung (28) und einem Ist-Reifeninnendruck (27), die sensorisch erfasst werden, einzustellen, **dadurch gekennzeichnet, dass** ein von der Reifendruckregelanlage (6) einzuhaltender Soll-Reifeninnendruck (33) unter Berücksichtigung eines Fahrzustands (26), zumindest einer Einfederungskennlinie (38, 39, 43, 64) sowie einer von einer Radlast (30) und/oder Bodeneigenschaften (31) abhängigen Soll-Einfederung (32) bestimmt wird, wobei der Soll-Reifeninnendruck (33, 33a) in Abhängigkeit von wenigstens einer auswählbaren Soll-Einfederungskennlinie (29, 45, 56) vorgegeben wird, wobei die Soll-Einfederungskennlinie (29, 45, 56) in Abhängigkeit von den Bodeneigenschaften (31) und/oder der Fahrgeschwindigkeit ausgewählt wird.

2. Verfahren nach Anspruch 1, **dadurch gekennzeichnet, dass** zur Reifeninnendruckregelung in der Steuerungsvorrichtung (20) auszuwählende Regelstrategien (34, 35, 36, 37) hinterlegt sind, wobei eine Regelstrategie (34) "Last" auf Radlaständerungen des Arbeitsfahrzeugs (1, 5), eine Regelstrategie (35) "Boden" auf Änderungen von Bodeneigenschaften (31), eine Regelstrategie (36) "Extremwerte" zur Bestimmung eines Regelbereiches (51) sowie eine Regelstrategie (37) "Dynamisch" bei gleichzeitiger Änderung von Bodeneigenschaften (31) und Radlast (30) angewendet wird.

3. Verfahren nach Anspruch 2, **dadurch gekennzeichnet, dass** die Auswahl einer der Regelstrategien (34, 35, 36, 37) in Abhängigkeit von zumindest einer Parameteränderung einer der Bodeneigenschaften (31) und/oder der Radlast (30) durchgeführt wird.

4. Verfahren nach Anspruch 2 oder 3, **dadurch gekennzeichnet, dass** gemäß der Regelstrategie (34) "Last" bei Detektion einer Änderung der Radlast (30) bei konstanten Bodeneigenschaften (31) und konstantem Ist-Reifeninnendruck (27) der Soll-Reifeninnendruck (33) angepasst wird, bis die Ist-Einfederung (28) zumindest annähernd einen auf der ausgewählten Soll-Einfederungskennlinie (29) liegenden Wert annimmt.

5. Verfahren nach einem der Ansprüche 2 bis 4, **dadurch gekennzeichnet, dass** gemäß der Regelstrategie (35) "Boden" bei Detektion einer Änderung einer der Bodeneigenschaften (31) bei konstanter Radlast (31) und konstantem Ist-Reifeninnendruck (27) eine adaptierte Soll-Einfederungskennlinie (45) zur Regelung bestimmt wird.

6. Verfahren nach Anspruch 5, **dadurch gekennzeichnet, dass** die adaptierte Soll-Einfederungskennlinie (45) in Abhängigkeit von einer für die geänderte Bodeneigenschaft (31) spezifischen Soll-Einfederung (28) bei konstanter Radlast (30) vorgegeben wird.

7. Verfahren nach Anspruch 5 oder 6, **dadurch gekennzeichnet, dass** durch die Bestimmung einer Änderung der Ist-Einfederung (28a) bei konstanter Radlast (30) und konstantem Ist-Reifeninnendruck (27) eine Änderung einer Bodeneigenschaft (31) abgeleitet wird, und dass aus der abgeleiteten Änderung der Bodeneigenschaft (31) eine adaptierte Soll-Einfederungskennlinie (45) bestimmt wird, anhand der ein optimierter Soll-Reifeninnendruck (33a) bestimmt wird.

8. Verfahren nach einem der Ansprüche 2 bis 7, **dadurch gekennzeichnet, dass** gemäß der Regelstrategie (36) "Extremwerte" Radlast-Reifeninnendruck-Kennlinien als Begrenzungen eines Regelbereiches (31) unterhalb der Soll-Einfederungskennlinie (29) vorgegeben werden, innerhalb dessen der Soll-Reifeninnendruck (33) vorgegeben wird.

9. Verfahren nach einem der Ansprüche 2 bis 8, **dadurch gekennzeichnet, dass** gemäß der Regelstrategie (37) "Dynamisch" bei einem gleichzeitigen Auftreten von Änderungen der Radlast (30) und einer der Bodeneigenschaften (31) in einem ersten Schritt die bisherige Soll-Einfederungskennlinie (29) in Abhängigkeit von einer Änderung der Bodeneigenschaft (31), die mittels einer Änderung der Ist-Einfederung (28) bestimmt wird, eine der geänderten Bodeneigenschaft (31) entsprechend adaptierte Einfederungskennlinie (60) bestimmt wird, dass in einem zweiten Schritt in Abhängigkeit von einer quantitativ bestimmten Änderung der Radlast (30) eine korrespondierende Einfederungskennlinie (64) unter Annahme einer konstanten Bodeneigenschaft (31) bei geänderter Radlast (30) bestimmt wird, dass in einem dritten Schritt ein Vergleich zwischen dem eingestellten Soll-Reifeninnendruck (33) gemäß der Soll-Einfederungskennlinie (29) vor der Änderung der Bodeneigenschaft (31) und einem zu erwartenden Soll-Reifeninnendruck (62) gemäß der korrespondierenden Einfederungskennlinie (64) nach der bestimmten Änderung der Radlast (30) durchgeführt wird und eine daraus resultierende Verschiebung (63) zwischen einer ersten Einfederungskennlinie (38) und der korrespondierenden Einfederungskennlinie (64) zur Verschiebung der Soll-Einfederungskennlinie (56) gegenüber der ursprünglichen Soll-Einfederungskennlinie (29) herangezogen wird.

10. Verfahren nach einem der vorangehenden Ansprüche, **dadurch gekennzeichnet, dass** eine Änderung einer Bodeneigenschaft (31) mittels zumindest einer Sensoreinrichtung (23) oder durch eine manuelle Eingabe über eine Eingabe-Ausgabe-Einheit (19) der Steuerungsvorrichtung (20) bestimmt wird.

11. Verfahren nach einem der vorangehenden Ansprüche, **dadurch gekennzeichnet, dass** eine Änderung der Radlast (30) mittels zumindest einer Sensoreinrichtung (8, 9.1, 9.2, 9.3, 9.4, 18) und/oder eine Änderung der Konfiguration des Arbeitsfahrzeugs (1, 5), die von einer Sensoreinrichtung automatisch bestimmt und/oder durch manuelle Übermittlung durch eine Eingabe-Ausgabe-Einheit (19) der Steuerungsvorrichtung (20) an diese, erfasst wird.

12. Verfahren nach einem der vorangehenden Ansprüche, **dadurch gekennzeichnet, dass** die Bestimmung der Ist-Einfederung (28) unmittelbar durch zumindest eine den Radreifen (7) zugeordnete Sensoreinrichtung (24) oder mittelbar durch ein in einer Speichereinheit (25) der Steuerungsvorrichtung (20) hinterlegtes mathematisches Modell durchgeführt wird.

13. Landwirtschaftliches Arbeitsfahrzeug, umfassend eine Reifendruckregelanlage (6) zur automatischen Reifeninnendruckregelung von Radreifen (7), eine Steuerungsvorrichtung (20) mit einer Recheneinheit und einer Speichereinheit (25) zur Ansteuerung der Reifendruckregelanlage (6), Sensoreinrichtungen (24) zur Erfassung einer Ist-Einfederung (28) und eines Ist-Reifeninnendruckes (27) der Radreifen (7), ausgestaltet zur Verwendung in einem Verfahren nach einem der vorhergehenden Ansprüche.

## Claims

1. A method for the automatic internal tyre pressure regulation of wheel tyres (7) on an agricultural working vehicle (1, 5), with a tyre pressure regulation system (6), which is controlled by a control device (20), for adjusting the internal tyre pressure of the wheel tyres (7) as a function of an actual deflection (28) and an actual internal tyre pressure (27) which is detected via a sensor, **characterized in that** a target internal tyre pressure (33) to be maintained by the tyre pressure regulation system (6) is determined in consideration of a driving status (26), at least one deflection characteristic (38, 39, 43, 64), as well as a target deflection (32) which is a function of a wheel load (30) and/or ground properties (31), wherein
the target internal tyre pressure (33, 33a) is specified as a function of at least one selectable target deflection characteristic (29, 45, 56), wherein the target deflection characteristic (29, 45, 56) is selected as a function of the ground properties (31) and/or the driving speed.

2. The method according to claim 1, **characterized in that** in order to regulate the internal tyre pressure, control strategies (34, 35, 36, 37) which are to be selected are stored in the control device (20), wherein a "Load" control strategy (34) is used for variations in the wheel load of the working vehicle (1, 5), a "Ground" control strategy (35) is used for variations in the ground properties (31), an "Extreme values" control strategy (36) is used for the determination of a control range (51) and a "Dynamic" control strategy (37) is used in the case of a simultaneous variation of ground properties (31) and wheel load (30).

3. The method according to claim 2, **characterized in that** the selection of one of the control strategies (34, 35, 36, 37) is made as a function of at least one parametric variation of one of the ground properties (31) and/or of the wheel load (30).

4. The method according to claim 2 or claim 3, **characterized in that** according to the "Load" control strategy (34), upon detection of a variation in the wheel load (30) for constant ground properties (31) and constant actual internal tyre pressure (27), the target internal tyre pressure (33) is adjusted until the actual deflection (28) at least approximately takes a value lying on the selected target deflection characteristic (29).

5. The method according to one of claims 2 to 4, **characterized in that** according to the "Ground" control strategy (35), upon detection of a variation in one of the ground properties (31) for constant wheel load (31) and constant actual internal tyre pressure (27), an adapted target deflection characteristic (45) is determined for the regulation.

6. The method according to claim 5, **characterized in that** the adapted target deflection characteristic (45) is specified as a function of a target deflection (28) for constant wheel load (30) which is specific to the varied ground property (31).

7. The method according to claim 5 or claim 6, **characterized in that** a variation in a ground property (31) is derived by the determination of a variation in the actual deflection (28a) for constant wheel load (30) and constant actual internal tyre pressure (27), and **in that** from the derived variation in the ground property (31), an adapted target deflection characteristic (45) is determined, with the aid of which an optimized target internal tyre pressure (33a) is determined.

8. The method according to one of claims 2 to 7, **characterized in that** according to the "Extreme values" control strategy (36), wheel load - internal tyre pressure characteristics are specified as boundaries of a control range (31) below the target deflection characteristic (29), within which control range the target internal tyre pressure (33) is specified.

9. The method according to one of claims 2 to 8, **characterized in that** according to the "Dynamic" control strategy (37), upon the simultaneous occurrence of variations in the wheel load (30) and one of the ground properties (31), in a first step, the previous target deflection characteristic (29), as a function of a variation in the ground property (31) which is determined by means of a variation in the actual deflection (28), is determined as an adapted deflection characteristic (60) corresponding to the varied ground property (31), **in that** in a second step, as a function of a quantitatively determined variation in the wheel load (30), a corresponding deflection characteristic (64) is determined assuming a constant ground property (31) for a varied wheel load (30), **in that** in a third step, a comparison between the adjusted target internal tyre pressure (33) according to the target deflection characteristic (29) before the variation in the ground property (31) and an expected target internal tyre pressure (62) according to the corresponding deflection characteristic (64) after the determined variation in wheel load (30) is carried out, and an offset (63) resulting therefrom between a first deflection characteristic (38) and the corresponding deflection characteristic (64) is used in order to offset the target deflection characteristic (56) with respect to the original deflection characteristic (29).

10. The method according to one of the preceding claims, **characterized in that** a variation in a ground property (31) is determined by means of at least one sensor device (23) or by a manual input via an input/output unit (19) of the control device (20).

11. The method according to one of the preceding claims, **characterized in that** a variation in the wheel load (30) is detected by means of at least one sensor device (8, 9.1, 9.2, 9.3, 9.4, 18) and/or a variation in the configuration of the working vehicle (1, 5), which is automatically determined by a sensor device and/or by manual transmission through an input/output unit (19) of the control device (20) on the working vehicle.

12. The method according to one of the preceding claims, **characterized in that** the determination of the actual deflection (28) is carried out directly by at least one of the sensor devices (24) associated with the wheel tyres (7) or indirectly by a mathematical model stored in a memory unit (25) of the control device (20).

13. An agricultural working vehicle, comprising a tyre pressure regulation system (6) for the automatic regulation of the internal tyre pressure of wheel tyres (7), a control device (20) with a processing unit and a memory unit (25) for controlling the tyre pressure regulation system (6), sensor devices (24) for detecting an actual deflection (28) and an actual internal tyre pressure (27) of the wheel tyres (7), designed for use in a method according to one of the preceding claims.

## Revendications

1. Procédé de régulation automatique de la pression interne de pneus de roues (7) sur un engin agricole (1, 5), comprenant une installation de régulation de pression de pneus (6) qui est activée par un dispositif de commande (20) aux fins de réguler la pression interne des pneus de roues (7) en fonction d'une compression de ressort réelle (28) et d'une pression de roue interne réelle (27), qui sont détectées par des capteurs, **caractérisé en ce qu'**une pression de roue interne de consigne (33) devant être respectée par l'installation de régulation de pression de pneus (6) est définie en tenant compte d'un mode de marche (26), d'au moins une caractéristique de compression de ressort (38, 39, 43, 64) et d'une compression de ressort de consigne (32) dépendant d'une charge de roue (30) et/ou de propriétés du sol (31),
la pression de roue interne de consigne (33, 33a) étant prédéfinie en fonction d'au moins une caractéristique de compression de ressort de consigne (29, 45, 56) pouvant être sélectionnée, la caractéristique de compression de ressort de consigne (29, 45, 56) étant sélectionnée en fonction des propriétés du sol (31) et/ou de la vitesse de déplacement.

2. Procédé selon la revendication 1, **caractérisé en ce que** pour la régulation de pression interne de pneus, des stratégies de régulation (34, 35, 36, 37) à sélectionner sont enregistrées dans le dispositif de commande (20), parmi lesquelles une stratégie de régulation (34) « Charge » est appliquée à des variations de la charge de roue de l'engin (1, 5), une stratégie de régulation (35) « Sol » est appliquée à des variations des propriétés du sol (31), une stratégie de régulation (36) « Valeurs extrêmes » est appliquée pour déterminer une plage de régulation (51), et une stratégie de régulation (37) « Dynamique » est appliquée lors de la variation simultanée des propriétés du sol (31) et de la charge de roue (30).

3. Procédé selon la revendication 2, **caractérisé en ce que** la sélection de l'une des stratégies de régulation (34, 35, 36, 37) est réalisée en fonction d'au moins une variation de paramètres parmi les propriétés du sol (31) et/ou la charge de roue (30).

4. Procédé selon la revendication 2 ou 3, **caractérisé en ce que** conformément à la stratégie de régulation (34) « Charge », en cas de détection d'une variation de la charge de roue (30) en présence de propriétés du sol (31) constantes et de pression de roue interne réelle (27) constante, la pression de roue interne de consigne (33) est adaptée jusqu'à ce que la compression de ressort réelle (28) adopte au moins approximativement une valeur située sur la caractéristique de compression de ressort de consigne (29) sélectionnée.

5. Procédé selon une des revendications 2 à 4, **caractérisé en ce que** conformément à la stratégie de régulation (35) « Sol », en cas de détection d'une variation de l'une des propriétés du sol (31) en présence d'une charge de roue (31) constante et d'une pression de roue interne réelle (27) constante, une caractéristique de compression de ressort de consigne (45) adaptée est définie en vue de la régulation.

6. Procédé selon la revendication 5, **caractérisé en ce que** la caractéristique de compression de ressort de consigne (45) adaptée est prédéfinie en fonction d'une compression de ressort de consigne (28) spécifique de la propriété du sol (31) modifiée, en présence d'une charge de roue (30) constante.

7. Procédé selon la revendication 5 ou 6, **caractérisé en ce que** suite à la détermination d'une modification de la compression de ressort réelle (28a), à charge de roue (30) constante et à pression de roue interne réelle (27) constante, une modification d'une propriété du sol (31) est déduite, et **en ce que** l'on détermine à partir de la modification déduite de la propriété du sol (31), une caractéristique de compression de ressort de consigne (45) adaptée, à l'aide de laquelle on détermine une pression de roue interne de consigne (33a) optimisée.

8. Procédé selon une des revendications 2 à 7, **caractérisé en ce que** conformément à la stratégie de régulation (36) « Valeurs extrêmes », des caractéristiques charge de roue-pression de pneu interne sont prédéfinies en tant que limitations d'une plage de régulation en dessous de la caractéristique de compression de ressort de consigne (29), à l'intérieur de laquelle la pression de roue interne de consigne (33) est prédéfinie.

9. Procédé selon une des revendications 2 à 8, **caractérisé en ce que** conformément à la stratégie de régulation (37) « Dynamique », en cas d'apparition simultanée de variations de la charge de roue (30) et de l'une des propriétés du sol (31), on détermine, dans une première étape, la caractéristique de compression de ressort de consigne (29) existant jusqu'à présent, en fonction d'une variation de la propriété du sol (31) qui est déterminée à l'aide d'une variation de la compression de ressort réelle (28), une caractéristique de compression de ressort (60) adaptée en fonction de la propriété de sol (31) modifiée est déterminée, **en ce que**, dans une deuxième étape, une caractéristique de compression de ressort (64) correspondante est déterminée en fonction d'une variation quantitative déterminée de la charge de roue (30), en supposant une propriété du sol (31) constante pour une charge de roue (30) modifiée, **en ce que**, dans une troisième étape, une comparaison est effectuée entre la pression de roue interne de consigne (33) réglée, conformément à la caractéristique de compression de ressort de consigne (29) avant la modification de la propriété du sol (31), et une pression de roue interne de consigne (62) attendue, conformément à la caractéristique de compression de ressort (64) correspondante après la modification déterminée de la charge de roue (30), et un décalage (63) résultant entre une première caractéristique de compression de ressort (38) et la caractéristique de compression de ressort (64) correspondante est utilisé pour le décalage de la caractéristique de compression de ressort de consigne (56) par rapport à la caractéristique de compression de ressort de consigne (29) initiale.

10. Procédé selon une des revendications précédentes, **caractérisé en ce qu'**une variation d'une propriété du sol (31) est déterminée à l'aide d'au moins un dispositif à capteur (23) ou par saisie manuelle par l'intermédiaire d'une unité d'entrée-sortie (19) du dispositif de commande (20).

11. Procédé selon une des revendications précédentes, **caractérisé en ce qu'**une variation de la charge de roue (30) est détectée à l'aide d'au moins un dispositif à capteur (8, 9.1, 9.2, 9.3, 9.4, 18) et/ou un changement de la configuration de l'engin (1, 5) est détecté, qui est déterminé de façon automatique par un dispositif à capteur et/ou est communiqué à celui-ci par transmission manuelle ou par l'intermédiaire d'une unité d'entrée-sortie (19) du dispositif de commande (20).

12. Procédé selon une des revendications précédentes, **caractérisé en ce que** la détermination de la compression de ressort réelle (28) est effectuée directement par au moins un dispositif à capteur (24) associé aux roues de pneus (7), ou indirectement par le biais d'un modèle mathématique enregistré dans une unité de mémoire (25) du dispositif de commande (20).

13. Engin agricole comprenant une installation de régulation de pression de pneus (6) destinée à la régulation automatique de la pression interne de pneus de roues (7), un dispositif de commande (20) doté d'une unité de calcul et d'une unité de mémoire (25) et destiné à activer l'installation de régulation de pression de pneus (6), des dispositifs à capteur (27) destinés à détecter une compression de ressort réelle (28) et une pression de roue interne réelle (27) des pneus de roues (7), agencé en vue d'une utilisation dans un procédé selon une des revendications précédentes.
